# EUROPEAN PATENT SPECIFICATION

(11) **EP 0 566 657 B1**
(45) Date of publication and mention of the grant of the patent: **05.08.1998**
(21) Application number: 92904023.6
(22) Date of filing: 10.01.1992
(51) Int. Cl.: G01J 4/04, G01N 21/21

(54) **SIMULTANEOUS MULTIPLE ANGLE/MULTIPLE WAVELENGTH ELLIPSOMETER AND METHOD**
GLEICHZEITIGES VIELFACH-WINKEL/VIELFACH-WELLENLÄNGEN ELLIPSOMETER UND METHODE
ELLIPSOMETRE A CAPACITE OPERATIONNELLE SIMULTANEE SOUS DES ANGLES ET AVEC DES LONGUEURS D'ONDES MULTIPLES ET PROCEDE D'UTILISATION

(30) Priority: 11.01.1991 US 640100
(43) Date of publication of application: 27.10.1993
(73) Proprietor: RUDOLPH RESEARCH CORPORATION, Flanders, NJ 07836 (US)
(72) Inventor: SPANIER, Richard F., Chester, NJ 07930 (US); WOLF, Robert, G., Succasuna, NJ 07876 (US); LOITERMAN, Robert, M., Hackettstown, NJ 07840 (US); HALLER, Mitchell, E., Hackettstown, NJ 07840 (US)
(74) Representative: Lasch, Hartmut Dipl.-Ing.
(86) International application number: US9200280
(87) International publication number: WO9212404

(56) References cited:
- EP-A- 0 396 409
- EP-A- 0 397 388
- US-A- 4 434 025
- US-A- 4 472 633
- US-A- 4 672 196
- US-A- 4 686 360
- US-A- 4 838 695
- US-A- 4 957 368
- US-A- 4 999 014

## Description

The present invention relates to an ellipsometer and an ellipsometry method for measuring the change in polarization state of light upon interaction with a sample for determining characteristics of the sample.

Ellipsometry, as defined by R.A. Azzam and N.M. Bashara in Ellipsometry and Polarized Light, published by North-Holland Physics Publishing, 1987 edition, is an optical technique for the characterization and observation of events at an interface or film between two media and is based on exploiting the polarization transformation that occurs as a beam of polarized light is reflected from or transmitted through the interface or film. Two factors make ellipsometry particularly attractive: (1) its essential non-perturbing character (when the wavelength and intensity of the light beam are properly chosen) hence its suitability for in-situ measurements, and (2) its remarkable sensitivity to minute interfacial effects, such as the formation of a sparsely distributed sub-monolayer of atoms or molecules. The great diversity of situations in nature and man-made systems where interfaces and films play an important role has led to the application of ellipsometry in a wide spectrum of fields such as physics, chemistry, materials and photographic science, biology, as well as optical, electronic, mechanical, metallurgical and biomedical engineering.

Ellipsometry is sometimes referred to as polarimetry, generalized polarimetry, or complete polarimetry. The latter names are more common especially when interaction with the sample involves transmission of light through the bulk of the sample and the polarization transformation depends on bulk sample properties as well as surface properties and films.

Azzam and Bashara further state in their aforementioned book that ellipsometry can be generally defined as the measurement of the state of polarization of a polarized vector wave. Ellipsometry is generally conducted in order to obtain "information" about an "optical system" that modifies the state of polarization. In a general scheme of ellipsometry, a polarized light-wave is allowed to interact with an optical system under investigation. The interaction changes the state of polarization of the wave. Measurement of the initial and final states of polarization, repeated for an adequate number of different initial states, leads to the determination of the law of transformation of polarization by the system as described, for example, by its Jones or Mueller matrix. To extract more fundamental information about the optical system than is conveyed by its Jones or Mueller matrix, it is necessary to examine light-matter interaction within the system by the electromagnetic theory of light. In other words, it is necessary to study the details of the internal polarization-modifying processes that are responsible for the external behavior as described by the measured Jones or Mueller matrix of the system.

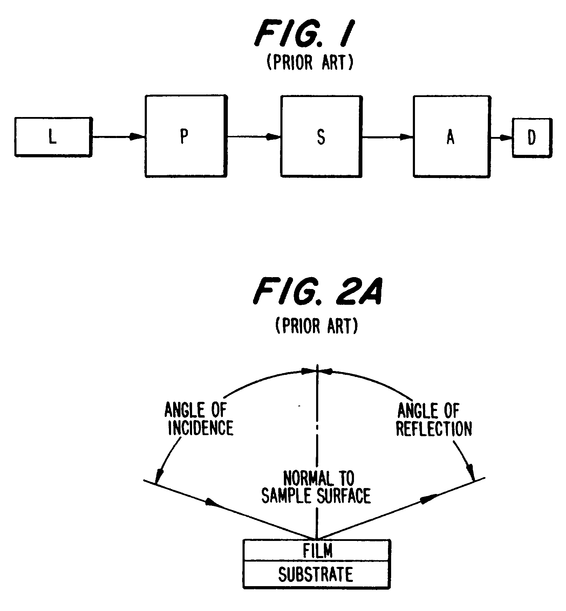

An operational diagram of a general ellipsometer arrangement as shown in Ellipsometry and Polarized Light is shown in Figure 1 of the drawings. A beam from a suitable light source (L) is passed through a variable polarizer (P) to produce light of known polarization. This light interacts with the optical system (S) under study and its polarization is modified. The modified state of polarization at the output of the system is measured (analyzed) by a polarization analyzer (A) followed by a photodetector (D). If the light interaction with the sample under study varies with wavelength, a monochromatic light source must be used or a means of isolating quasimonochromatic portions (with known wavelengths) of the light must be provided.

One way in which the light wave can interact with the optical system is by being reflected from a surface of the optical system (S). This reflection causes the state of polarization to be changed abruptly. Such a change can be explained using the Fresnel reflection coefficients for the two linear polarizations parallel (p) and perpendicular (s) to the plane of incidence. Another way the light wave can interact with the optical system is transmission through the material of the optical system. When the polarization state change depends on the angle of interaction of the light beam and the sample under study, as for example with reflection from (or oblique transmission through) a sample, the incident light should be as collimated as possible so only a single angle of incidence is measured at one time.

Azzam and Bashara explain that, since the time of Drude, reflection ellipsometry has been recognized as an important tool for the study of surfaces and thin films. Among the many useful applications of ellipsometry are: (1) measurement of the optical properties of materials and their frequency dependence (wavelength dispersion), the materials may be in the liquid or solid phase, may be optically isotropic or anisotropic, and can be either in bulk or thin-film form; (2) monitoring of phenomena on surfaces that involve either the growth of thin films starting from a submonolayer (e.g., by oxidation, deposition, adsorption or diffusion of impurities), or the removal of such films (e.g., by desorption, sputtering or diffusion); and (3) measurement of physical factors that affect the optical properties such as electric and magnetic fields, stress or temperature.

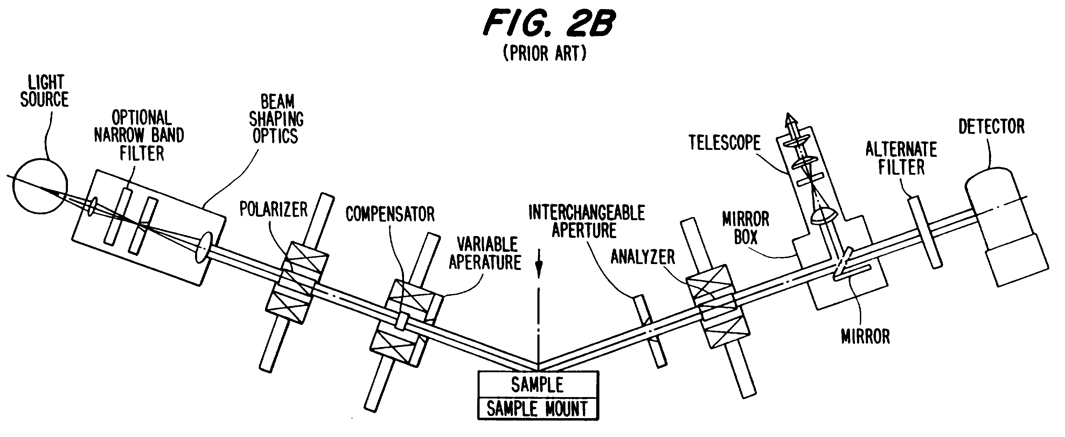

A description of the principles of ellipsometry, and a discussion of the reflection process, the measurement process, and data reduction can be found in "Ellipsometry A Century Old New Technique" by Dr. Richard F. Spanier, Industrial Research, September 1975. A diagram of a conventional ellipsometer from Dr. Spanier's article is shown in Figure 2B. Many additional types of automated and manually operated ellipsometers are known in the art. Dr. Spanier states in the article that ellipsometry involves the measurement of tan ψ, the change in the amplitude ratio upon reflection, and Δ, the change in the phase difference upon reflection. The quantities Δ and ψ are functions of the optical constants of the surface, the wavelength of the light used, the angle of incidence, the optical constants of the ambient medium, and for film-covered surfaces, the thicknesses and optical constants of the films.

Thus, in order to be able to compute the information about a sample's properties which cause a polarization state change in the reflected light, it is necessary to convert the polarization state change together with the angle of incidence and wavelength into physical properties of the sample according to some mathematical model. Properties such as refractive index, thickness, and absorption index of films on a surface or the optical constants of bare surfaces can be computed, for example. Similarly, in the case of transmitted light, properties such as the birefringence of the bulk material can be computed. Each ellipsometric measurement of polarization state change yields one value for Δ and one value for ψ. Thus, at best, two of the properties of the surface (whether or not film covered) or two properties of the bulk (in the case of transmitted light) can be computed if values for the remaining properties are known from other sources.

Frequently, in the art, one can compute more of these properties, of film covered surfaces, for example, if one has values for Δ and values for ψ, at more than one angle of incidence; preferably, at many angles of incidence. Theoretically, one property can be computed for each independent Δ and one property can be computed for each independent ψ measured but it is better to overdetermine the unknowns with extra values of Δ and ψ. Accordingly, it is advantageous to measure as many angles of incidence on a particular sample as possible. However, this has not been done frequently in the past because it is so cumbersome to get the data by making separate successive measurements at each angle through the use of a scanning technique.

It has also been proposed to provide ellipsometers with a plurality of duplicate setups with multiple beams all of different, discrete angles in order to simultaneously obtain information for light at different angles of incidence. These ellipsometers essentially combine several ellipsometers of the known type and use them simultaneously. This technique is limited in the number of angles that can be simultaneously measured because of the need for a plurality of ellipsometers, which can add considerably to the initial cost and maintenance of such a system.

EP-A-0 396 409 refers to multiple angle of incidence ellipsometry, but describes an implementation using normal incidence reflective optics for generating the angle range onto the sample. The use of a normal incidence, reflective lens for generating the angle range for multiple angle of incidence ellipsometry has major drawbacks. Ellipsometric measurements must be made at significantly large angle of incidence (preferable near 70 degrees angle of incidence) to provide useful film information. Near normal angle of incidence, there is no significant ellipsometric information. Therefore, the lens used in a normal incidence implementation, must necessarily have a high numerical aperture. To obtain a maximum angle of incidence of 70 degrees, the lens must have a numerical aperture of at least NA ≥ 0.94. This is approaching the theoretical limit for lens numerical aperture (NA =1). The fabrication and alignment of lenses having NA ≥ 0.94, is very diffiicult. For some applications, it may be useful to increase the maximum angle of incidence greater than 70 degrees. For a normal incidence implementation, this means increasing the numerical aperture of the lens even greater than NA = 0.94. The practical problems of fabricating and aligning such a lens become overwhelming, so that there is a practical limit to the maximum angle of incidence that can be achieved with this technique.

Furthermore, the light rays travelling through a high numerical aperture reflective lens undergo reflections at large angles of incidence off the surface of the lens, thereby introducing significant polarization effects. The polarization effect of the lens adds to the polarization effects generated by the sample under study making accurate measurements more difficult.

There is a need in the art for an improved ellipsometry method and ellipsometer for measuring a large plurality of angles of incidence at one time, quickly and without complicated operator intervention or scanning and wherein only one ellipsometer and a single beam are required. The aim of the present invention is to provide such an improved ellipsometry method and ellipsometer and to thereby overcome the aforementioned disadvantages of the conventional methods and ellipsometers.

More particularly, an object of the invention is to provide an improved ellipsometry method and ellipsometer which permit the simultaneous illumination of a sample at a whole range of angles of incidence from a single beam of light and which permit the rapid, easy collection of a large multiplicity of data for different angles or ranges of angles within the whole range of angles.

A further object of the invention is to provide an improved ellipsometry method and ellipsometer as described in the previous paragraph which permits easy collection of a large multiplicity of data at different light wavelengths as well as angles.

An additional object of the invention is to provide an improved ellipsometry method and ellipsometer having the aforementioned advantages wherein the actual illuminated spot on the sample area can be extremely small so that all the rays with different angles of incidence measure essentially the same region of the sample.

These and other objects of the invention are attained by the ellipsometry method of the invention according to claim 1. It has been found that by delivering polarized light to the sample at a multiplicity of angles from a single beam of light and through the use of a plurality of light detector means for detecting the light reflected from the surface (or transmitted through the surface and bulk material) for each of a plurality of different angles of incidence, data can be rapidly generated in terms of Δ and ψ for each of the plurality of different angles of incidence for which reflected or transmitted light is separately detected by respective ones of a plurality of light detector means.

In the disclosed embodiment the light at different angles of incidence is provided by directing parallel light through one or more lenses for focusing the light on the surface. The lens has an effective aperture to focal length ratio for focusing the light on the surface at angles of incidence which vary over a range. Although a range of angles of as low as 1 to 2 degrees may be useful for some samples, a range of angles of incidence of from 2° to more than 30° is preferred. The larger the range of angles of incidence the better the utility and versatility of the equipment. The light directed onto the surface at different angles of incidence is most generally elliptically polarized light. In one form of the invention the light is monochromatic light but according to another form of the invention the polarized light could be polychromatic light provided a wavelength isolation means, such as a filter, monochromator or spectrometer is present to assure that the detectors see only a quasimonochromatic portion thereof during one measurement of Δ, and ψ. In yet another form of the invention, the polarized light can be derived from two or more light sources (that may be monochromatic or polychromatic) arranged to direct the light along a common optical axis, wherein light from any single one of the sources can be selected by only energizing the correct source, or selected with a movable mirror, or selected by blocking the remainder with shutters, filters, monochromators, or selected by a combination of them. The polarized light is simultaneously directed at different angles of incidence onto the same spot on the surface of the sample. In the illustrated embodiment, the spot has a diameter of 10 microns.

The step of detecting the light reflected from the surface or transmitted through the sample for each of a plurality of different angles of incidence according to the ellipsometry method of the invention involves the use of an array of light detector means which are placed to intercept and detect the light reflected at a plurality of angles or transmitted along a plurality of angles. The array is a linear array in one form of the invention. Each of the plurality of different angles of incident light is separately detected simultaneously by respective ones of the plurality of light detector means. In one embodiment, the detected light is refocused by passing it through one or more lenses and the polarization state analyzer before it is detected. In other embodiments the lenses are not necessary.

The method of the invention can also further include the step of dispersing light (as a function of wavelength) reflected from the surface (or transmitted through the material) and detecting wavelength variation of the reflected (transmitted) dispersed light as, for example, through the use of an additional array of light detector means extending transverse to the plane of incidence of the central ray of the polarized light. This method permits simultaneous detection of both wavelength variation and angle of incidence variation.

The ellipsometer according to the invention comprises the features of claim 23. The disclosed forms of the invention involve directing polarized light onto the optical system on a single spot with a cone of polarized light which is derived from passing a single beam through a lens or lenses for focusing the light on the optical system. The lens has an effective aperture to focal length ratio for focusing the light on the surface with angles of incidence which vary over a range of at least one or two degrees. Preferably, the range of angles of incidence is equal to or greater than 30 degrees as noted above.

The linear array of detectors of the ellipsometer, which are located in the plane of incidence of the central ray of the polarized light for detecting reflected or transmitted light, are preferably solid state photosensitive detectors which are integrated on a semiconductor chip. Particularly, the photosensitive detectors are photodiodes which each function as a separate detector for detecting a narrow range of angles of incidence of the rays illuminating the sample. Alternatively completely separate detectors or photomultipliers could be used and/or scanning techniques could be employed during detection.

These and other objects, features and advantages of the present invention will become more apparent from the following description when taken in connection with the accompanying which show, for purposes of illustration only, several embodiments in accordance with the present invention.

Figure 1 is an operational diagram of a general ellipsometer or arrangement wherein L, P, S, A, and D represent a light source, controlled polarizer, optical system under measurement, variable polarization analyzer, and photodetector, respectively.

Figure 2A is a schematic diagram illustrating a known reflection ellipsometry arrangement wherein the incoming collimated polarized light is reflected at an angle equal to its angle of incidence.

Figure 2B is a schematic diagram of a conventional nulling or photometric ellipsometer which measures changes in the state of polarized light reflected at a single angle incidence from the surfaces of samples resting on a sample mount.

Figure 3A is a schematic illustration of an ellipsometer according to a first embodiment of the invention.

Figure 3B is similar to 3A but illustrates the use of more than one light source.

Figure 4A is a simplified diagram of the ellipsometer of Figure 3A illustrating a lens system for focusing, a lens system for refocusing reflected light and a linear detector array for detecting the reflected light from the surface for each of a plurality of different angles of incidence.

Figure 4B is the simplified ellipsometer of Figure 4A but arranged to detect light transmitted through the sample at each of a plurality of angles.

Figure 5 is a schematic illustration of a portion of an ellipsometer according to a second embodiment of the invention wherein a wavelength dispersing element is provided along with an area array of detectors for detecting angle of incidence variation at a plurality of wavelengths.

Figure 6 is a schematic illustration of an ellipsometer of the type shown in Figures 3A and 4A where a portion of the incoming rays to the sample are blocked within a certain, known area to darken a portion of the detector array for properly aligning the sample in preparation for performing the ellipsometry method of the invention.

Figure 7A is a graph of measured values of psi as a function of angle of incidence obtained from a sample using an ellipsometer according to the invention.

Figure 7B is a graph of measured values of delta as a function of angle of incidence obtained from a sample using an ellipsometer according to the invention.

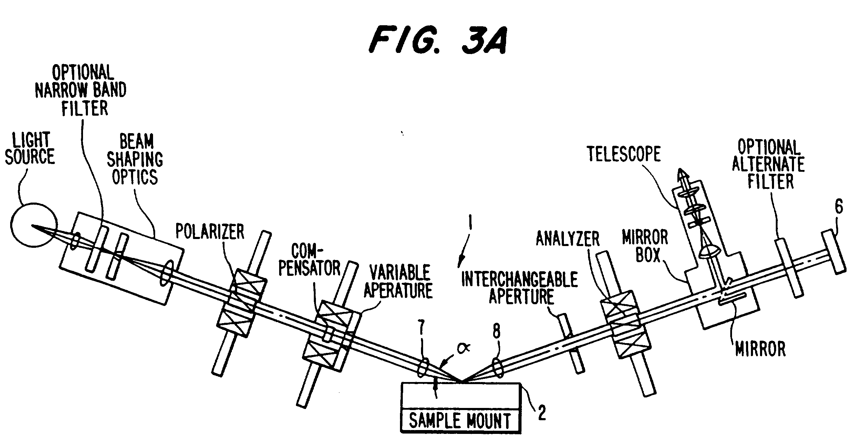

The ellipsometer 1 of the invention as shown in Figure 3A comprises means for directing polarized light onto the surface 2 and means for analyzing the polarization state of the light reflected from the surface. The means for directing includes a light source, beam shaping optics with an optional optical narrow band filter, a polarizer, a compensator and a variable aperture as in the conventional ellipsometer of Figure 2B. In addition, the means for directing further includes means for simultaneously directing polarized light from a single beam of light from the light source onto the surface 2 at different angles of incidence. This means for simultaneously directing the light at different angles of incidence onto the surface 2 comprises a focusing lens system 7. The lens system 7 has an effective aperture to focal length ratio for focusing the light on the surface 2 with angles of incidence which vary over a range of angles of at least one or two degrees. More particularly, in the illustrated preferred embodiment the range of angles of incidence a is 30 degrees. Larger angles could be employed for directing rays at the sample 2.

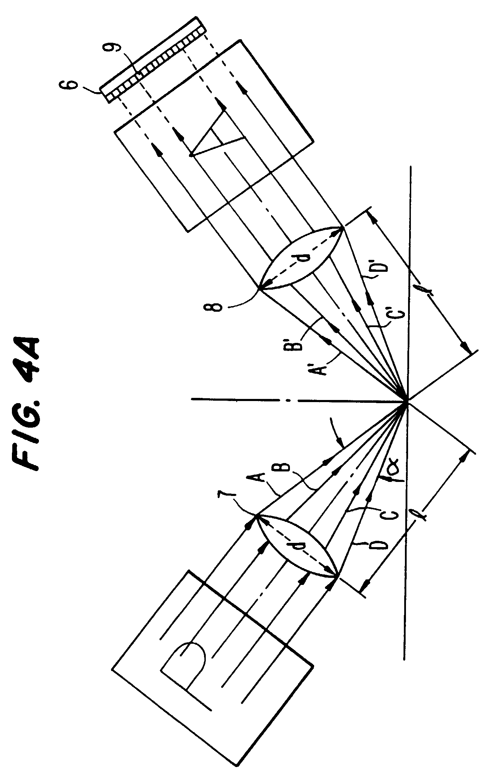

The focusing lens system 7 focuses the polarized light which may be from a He-Ne laser for example, down to a single small spot or point on the surface 2. The schematic illustration of Figure 4A depicts several rays A, B, C and D having widely varying angles of incidence which are focused on a single, small spot on the surface 2. Thus, the light directed on the small spot on surface 2 contains rays at many angles of incidence above and below the angle of incidence of the central ray through the focusing lens. Each one of the incoming rays is reflected at an angle equal to its angle of incidence with the polarization state of each of the rays being altered by that reflection, see rays A', B', C' and D' in Figure 4A. A detector array 6 is employed to detect a plurality of rays reflected from the surface 2 individually over different, narrow ranges of angles of incidence to simply and quickly obtain data at a plurality of angles of incidence. The means for analyzing includes the detector array as well as the analyzer and other elements as shown in Figure 3A and in some embodiments additional lenses represented by lens 8 in the reflected light.

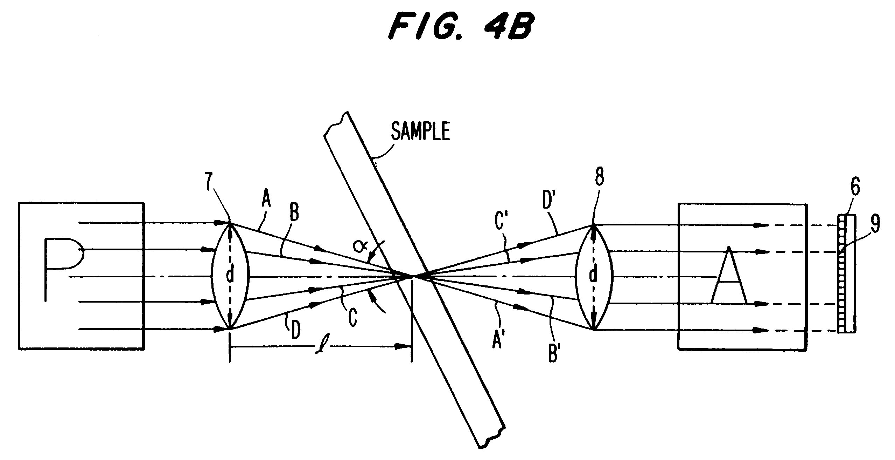

As shown in Figures 3A and 4A the diameter d of the lenses 7 and 8 corresponds to their effective diameter. In the illustrated embodiment the lenses 7 and 8 each have a diameter d of 18mm and a focal length 1 of 34mm. Other effective lens diameters and focal lengths could be employed so long as a range of angles of incidence, preferably at least 30°, is provided. The lens diameter and focal length are chosen with a view toward maximizing the number of angles of incidence of the light beams which strike the surface 2. Figure 4B is similar to Figure 4A but shows an arrangement where light is transmitted through the sample rather than reflected from a surface of the sample.

The refocusing lens or lenses 8 directs the reflected (transmitted) light toward the detector array 6. However, a refocusing lens need not be employed as the reflected (transmitted) light could be made to directly impinge upon an array of detectors. It is important that the lenses 7 and 8 only negligibly alter the polarization state of the light.

The detector array 6 is a linear, multiple element detector wherein each of the detector elements 9 can detect a narrow range of angles of incidence of the rays that illuminate the sample. In the disclosed embodiment the array 6 is a solid-state photosensitive detector array wherein the separate detector elements 9 are all integrated on one circuit chip. Particularly, the detector elements comprise a linear array of photodiodes. While integrated on a single circuit chip, the individual photodiodes can function as separate detectors. The linear array of the disclosed embodiment comprises 128 detector elements arranged in a row to provide data for 128 different angles of incidence where the full array is illuminated by the reflected (transmitted) light. The number of individual detector elements 9 could be more or less than that in the disclosed embodiment and the detector elements need not be integrated on a single chip but could be discrete detectors. By using a plurality of detector elements, it is possible to simultaneously detect the light reflected from the surface (or transmitted through the sample) for each of a plurality of different angles of incidence. It is also possible with the invention to employ a smaller number of detector elements which could be sequentially moved to mechanically scan the reflected (transmitted) rays for detection but this technique would require more time and could be less accurate, depending upon positioning accuracy.

The physical size of each of the detector elements is less than the expanse of the reflected rays so that each element detects only a certain narrow range of angles of incidence on the illuminating side. The output of each of the detectors is used in a conventional manner as with real time computer techniques to generate data in terms of Δ and ψ for each of those narrow ranges of angles of incidence. The data is then interpreted in a conventional manner. It matters in general which direction the linear array runs; the linear array preferably runs in the plane of the optical system. In the disclosed embodiment, the long axis of the linear detector array 6 lies in the plane of incidence of the central ray and perpendicular to the central ray for detecting the maximum number of incidence angles.

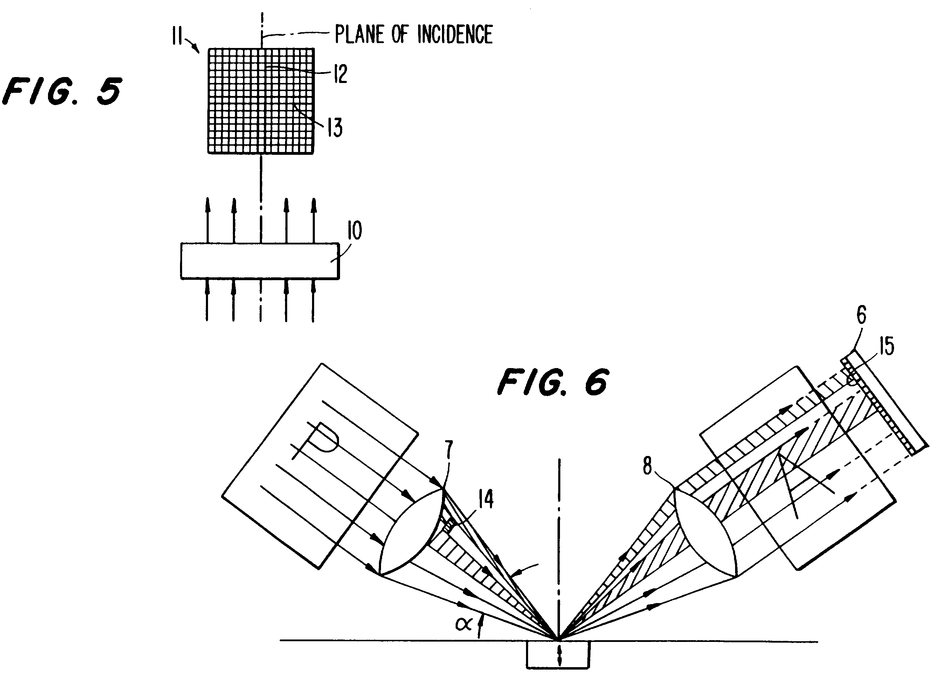

The embodiment of the invention shown in Figure 5 of the drawings is similar to that illustrated in Figures 3A and 4A except that polychromatic light is directed toward the sample rather than monochromatic light. In addition, a dispersing element 10 is provided in the reflected (or transmitted) beam for dispersing the reflected (transmitted) light from every angle of incidence. The detector area array 11 comprises columns of detector elements 12 arranged in linear arrays that are parallel to the plane of incidence of the central ray for detecting variations of angle of incidence. Each column of detector elements 12 sees only a quasimonochromatic portion of the polychromatic light for detecting rays reflected (transmitted) from a plurality of angles of incidence. Additionally, rows of detector elements 13 extend transverse to the plane of incidence of the central ray. Each row of detector elements 13 detect the wavelength variation of the dispersed, reflected (transmitted) beam from one of the plurality of angles of incidence. A minimum of one row and one column of detectors are required to detect both angle of incidence and wavelength variation. Additional rows and columns of detectors can provide additional useful information. The ellipsometer of Figure 5 is advantageous in that it enables simultaneous detection of the beam as a function of angle of incidence and wavelength without scanning either.

From the description of the ellipsometer of the invention, it is apparent that the ellipsometry method of the invention comprises directing polarized light onto a sample surface and analyzing the polarization state of the light reflected from the surface (or transmitted through the sample), wherein polarized light from a single beam of light is simultaneously directed onto the sample at different angles of incidence. In the disclosed forms of the invention, the light is directed onto the sample surface at a single spot with a cone of polarized light derived from the single beam. The angles of incidence preferably vary over a range equal to or greater than 30 degrees but some embodiments may provide as little as 2° of range or a range which is between 2° and 30°. Data is gathered for a plurality of different angles of incidence within the range of angles of incidence by detecting the light reflected from the surface (or transmitted through the sample) for each of a plurality of different angles of incidence.

Ellipsometry, in general, requires an awareness of the angles of incidence of the light striking the sample. Truly, sample alignment, both in tilt and height is important, and alignment telescope microscopes are often provided to aid in sample alignment. With the ellipsometer of the invention, the detector array can be used to not only simultaneously measure the multiple angles of incidence of the single beam, but can also be used to initially detect whether or not the reflecting surface 2 is in the correct plane relative to the instrument. This is accomplished by eliminating rays within a certain area of the sample of the incoming beam and determining which detector element or elements are dark or not illuminated as a result. Based upon this determination, the operator can change the sample plane as by raising the height of the sample mount 5, for example, until the correct pixel (or pixels) is dark.

As shown in Figure 6, a blocking element 14 obstructs the light from the focusing lens 7 in a certain known area thereby creating a darkened area 15 over a portion of the detector array 6. If the appropriate detector elements are not dark, the operator can correct this by raising or lowering the sample mount so that the sample is in the correct plane or elevation. From the above, it can be seen that the ellipsometer and ellipsometry method of the invention permit the simultaneous illumination of a sample at a whole range of angles of incidence from a single beam of light and collection of a large multiplicity of data for different angles of incidence rapidly and easily and with accuracy. The relative angle certainties are more accurate than with conventional mechanical scanning since the relative positions of the detector elements of the detector array are accurately fixed with respect to one another and the ellipsometer during generation of all data. Further, advantageously the actual illuminated spot on the sample area can be extremely small so that all the rays are really measuring nearly the same region of the sample. Therefore, the sample properties can be quickly and accurately computed.

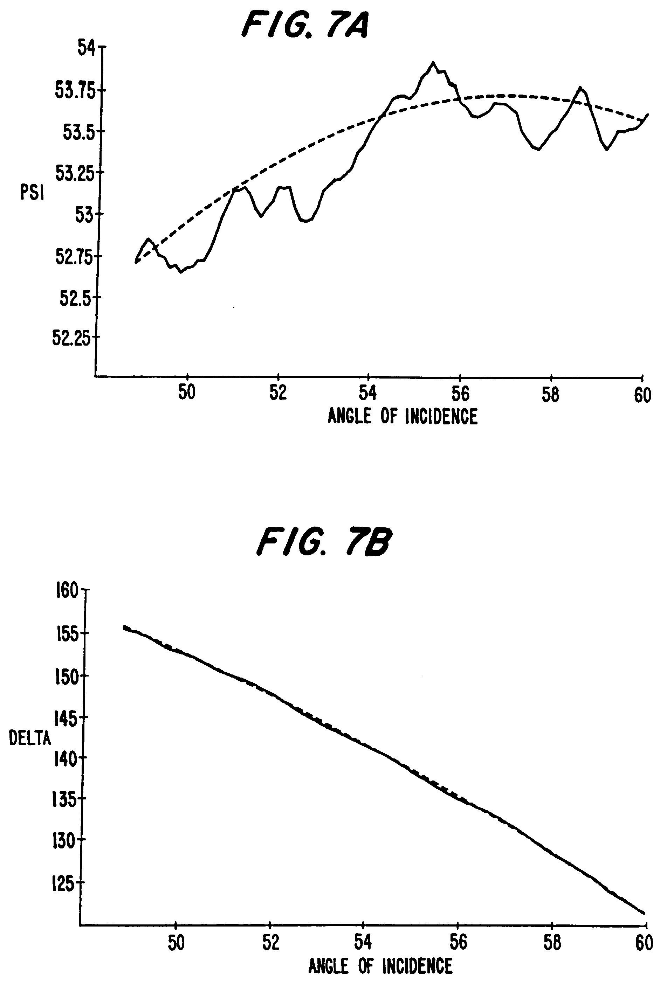

Figures 7A and 7B show actual ellipsometric data obtained at a plurality of angles of incidence of an instrument designed and constructed according to the preferred embodiment with a range of angles of 10 degrees. These measurements were made on a 1138 Angstrom film of silicon dioxide on a silicon substrate. The solid lines are the measured delta and psi values while the dashed lines represent the theoretical delta and psi computed for this sample.

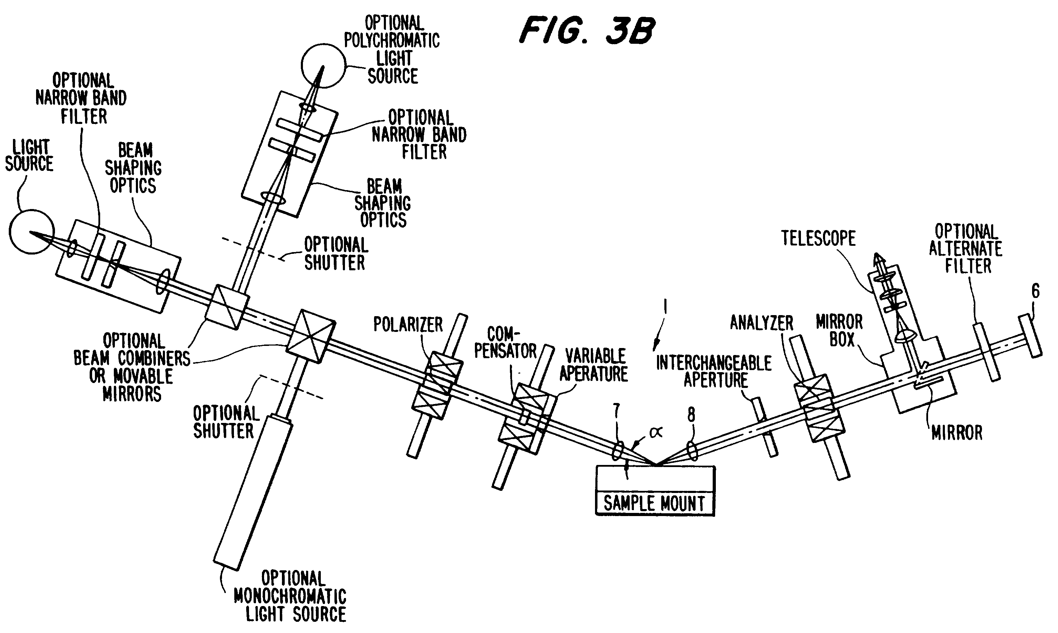

The ellipsometer of Figure 3B is like that of Figure 3A except that it has more than one light source, namely an additional, monochromatic light source and also a polychromatic light source as shown in Figure 3B. The several light sources are arranged to direct light along a common optical axis of the ellipsometer by way of one or more of mirrors, beam combiners and shutters as depicted in the drawing. Alternatively, the light sources could be selectively energized for providing the light from only one of the sources without need for shutters.

While we have shown and described only several embodiments in accordance with the present invention, it is understood that the same is not limited thereto, but is susceptible to numerous changes and modifications as known to those skilled in the art. Therefore, we do not wish to be limited to the details shown and described herein, but intend to cover all such changes and modifications as are encompassed by the scope of the appended claims.

## Claims

1. An ellipsometry method comprising
directing a beam of polarized light at an angle to a normal to the surface of an optical system under study so that said beam interacts with the optical system under study and
measuring the change in polarization state of the light interacted with the optical system,
characterized in that
polarized light from said beam of light is simultaneously directed to interact with the optical system at different angles of incidence to a normal to the surface of the system under study over a range of angles of incidence by focusing the beam of light entirely obliquely on the optical system under study with at least one lens that only negligibly alters the polarization state of the light and with a mean angle of incidence of said focused beam being larger than said range of angles of incidence, and
that the change in polarization state of the light interacted with the optical system under study is measured for each of a plurality of said different angles of incidence.

2. An ellipsometry method according to claim 1, wherein the light is interacted with the optical system under study by transmitting it through a material of the optical system.

3. An ellipsometry method according to claim 1, wherein the light is interacted with the optical system under study by reflecting it from a surface of the optical system.

4. An ellipsometry method according to claim 1, wherein the light is directed onto a surface of the optical system under study at a single spot with a cone of polarized light derived from a single beam.

5. An ellipsometry method according to claim 1, wherein the angles of incidence vary over a range of angles of at least 1-2 degrees.

6. An ellipsometry method according to claim 1, wherein the range of angles of incidence is from two degrees to more than thirty degrees.

7. An ellipsometry method according to claim 1, wherein the light at different angles of incidence is provided by directing parallel light through said at least one lens for focusing the light on the optical system under study, the lens having an effective aperture to focal length ratio for focusing the light on the optical system under study with angles of incidence which vary over a range of at least 1-2 degrees.

8. An ellipsometry method according to claim 1, wherein the light directed for interaction with the optical system under study at different angles of incidence is, in general, elliptically polarized light.

9. An ellipsometry method according to claim 1, wherein the polarized light is simultaneously directed at different angles of incidence onto the same spot on a surface of the optical system under study for reflection from the surface.

10. An ellipsometry method according to claim 9, wherein said spot has a diameter of less than or equal to ten microns.

11. An ellipsometry method according to claim 1, wherein the polarized light is monochromatic light.

12. An ellipsometry method according to claim 1, wherein the polarized light comprises two or more quasimonochromatic wavelength regions and all but one of the wavelength regions is excluded at a given time.

13. An ellipsometry method according to claim 1, wherein said step of measuring includes detecting the light interacted with the optical system under study for each of said plurality of different angles of incidence.

14. An ellipsometry method according to claim 13, wherein the interacted light is refocused by passing it through at least one lens before the light is detected.

15. An ellipsometry method according to claim 13, wherein the interacted light for each of said plurality of different angles of incident light is separately detected simultaneously.

16. An ellipsometry method according to claim 13, wherein a plurality of light detector means are provided in an array located so that respective light detector means intercept and detect interacted light from different angles of incident light.

17. An ellipsometry method according to claim 13, further comprising restricting the wavelength regions of the detected light to a quasimonochromatic portion.

18. An ellipsometry method according to claim 13, further comprising the steps of dispersing the light interacted with the optical system under study and detecting wavelength variation and angle of incidence variation of the dispersed light.

19. An ellipsometry method according to claim 18, wherein the polarized light is polychromatic light.

20. An ellipsometry method according to claim 1, including determining a change in amplitude ratio tan ψ and a change in phase difference Δ for light interacted with the optical system under study for each of said plurality of different angles of incidence.

21. An ellipsometry method according to claim 1, wherein each of said plurality of different angles of incidence is a narrow range of angles of incidence of the interacted light.

22. An ellipsometry method according to claim 1, further including aligning a sample of the optical system under study for ellipsometry, said aligning comprising directing polarized light onto a surface of the sample at different angles of incidence from a single beam of light so that said light is reflected onto a detector array for detecting the light reflected from the surface for each of a plurality of different angles of incidence, and including the steps of eliminating light rays within a certain area of the light beam directed onto the sample surface, determining which area of the detector array is not illuminated by reflected light as a result of said eliminating, and make any necessary adjustments in the position of the sample so that a correct area of the detector is not illuminated by reflected light.

23. An ellipsometer comprising means for directing a beam of polarized light at an angle to a normal to the surface of an optical system under study so that said beam interacts with the optical system under study, and means for measuring the change in polarization state of said light interacted with the optical system under study,
characterized in that
said means for directing polarized light includes means for simultaneously directing polarized light from said beam of light onto the optical system under study at different angles of incidence to a normal to the surface of the system under study over a range of angles of incidence, that said means for simultaneously directing includes at least one lens for focusing the single beam of light entirely obliquely on the optical system under study while only negligibly altering the polarization state of the light and with a mean angle of incidence of said focused beam being larger than said range of angles of incidence, and
that said means for measuring measures the change in polarization state of light interacted with the optical system under study for each of a plurality of said different angles of incidence.

24. An ellipsometer according to claim 23, wherein said different angles of incidence vary over a range of at least 1-2 degrees.

25. An ellipsometer according to claim 23, wherein the range of angles of incidence is from two degrees to more than thirty degrees.

26. An ellipsometer according to claim 23, wherein said at least one lens for focusing the light on the optical system under study having an effective aperture to focal length ratio for focusing the light on the optical system under study with angles of incidence which vary over a range of at least 1-2 degrees.

27. An ellipsometer according to claim 23, wherein said means for directing polarized light directs elliptically polarized light onto the optical system under study.

28. An ellipsometer according to claim 23, wherein said means for simultaneously directing polarized light onto the optical system under study at different angles of incidence directs the light at different angles of incidence onto the same spot on optical system under study.

29. An ellipsometer according to claim 23, wherein said polarized light is monochromatic light.

30. An ellipsometer according to claim 23, wherein said means for directing directs polarized light comprising two or more quasimonochromatic wavelength regions, and further comprising means for selectively excluding all but one of the wavelength regions at a time.

31. An ellipsometer according to claim 23, wherein said means for measuring includes a plurality of detectors for detecting the light interacted with the optical system under study at each of said plurality of different angles of incidence.

32. An ellipsometer according to claim 31, said means for measuring further comprising a lens or lenses for refocusing the interacted light before it is detected by said plurality of detectors.

33. An ellipsometer according to claim 31, wherein said plurality of detectors is in the form of an array of light detectors located so that respective light detectors intercept and detect interacted light from said different angles of incident light.

34. An ellipsometer according to claim 33, wherein said array is a linear array of light detectors.

35. An ellipsometer according to claim 33, wherein said detectors are solid-state photosensitive detectors which are integrated on a semiconductor chip.

36. An ellipsometer according to claim 23, further comprising means for dispersing the interacted light and means for detecting wavelength variation together with angle of incidence variation of the dispersed light.

37. An ellipsometer according to claim 36, wherein the polarized light is polychromatic light.

38. An ellipsometer according to claim 23, wherein the means for directing polarized light comprises a plurality of light sources each arranged to provide light which travels along a common optical axis.

39. An ellipsometer according to claim 38, further comprising means for preventing the polarized light from one or more of the plurality of sources from reaching the means for measuring.

40. An ellipsometer according to claim 39, wherein said means for preventing is one of the group consisting of a shutter, a means for de-energizing said one or more light sources and a blocking filter.

41. An ellipsometer according to claim 23, wherein said means for measuring enables determination of a change in amplitude ratio tan ψ and a change in phase difference Δ for light interacted with the optical system under study for each of said plurality of different angles of incidence.

42. An ellipsometer according to claim 23, wherein each of said plurality of different angles of incidence is a narrow range of angles of incidence of the interacted light.

## Patentansprüche

1. Ellipsometrie-Verfahren umfassend
das Richten eines Bündels polarisierten Lichts unter einem Winkel zu einer Normalen auf die Oberfläche eines zu untersuchenden optischen Systems, so daß das Bündel mit dem zu untersuchenden optischen System in Wechselwirkung tritt, und
das Messen der Veränderung des Polarisationszustandes des mit dem optischen System in Wechselwirkung tretenden Lichts,
dadurch gekennzeichnet,
daß das polarisierte Licht des Lichtbündels gleichzeitig über einen Einfallswinkelbereich auf die Oberfläche des zu untersuchenden Systems gerichtet wird, so daß es mit dem optischen System unter unterschiedlichen Einfallswinkeln zu einer Normalen in Wechselwirkung tritt, indem das Lichtbündel mittels zumindest einer Linse, die den Polarisationszustand des Lichts nur vernachlässigbar verändert, vollständig schräg auf dem zu untersuchenden optischen System fokussiert wird, wobei ein Haupt-Einfallswinkel des fokussierten Bündels größer als der Einfallswinkelbereich ist, und
daß die Veränderung des Polarisationszustandes des mit dem zu untersuchenden optischen System in Wechselwirkung tretenden Lichts für jeden einer Vielzahl von unterschiedlichen Einfallswinkel gemessen wird.

2. Ellipsometrie-Verfahren nach Anspruch 1, dadurch gekennzeichnet, daß das Licht mit dem zu untersuchenden optischen System in Wechselwirkung tritt, indem es durch das Material des optischen Systems transmittiert wird.

3. Ellipsometrie-Verfahren nach Anspruch 1, dadurch gekennzeichnet, daß das Licht mit dem zu untersuchenden optischen System in Wechselwirkung tritt, indem es an der Oberfläche des optischen Systems reflektiert wird.

4. Ellipsometrie-Verfahren nach Anspruch 1, dadurch gekennzeichnet, daß das Licht als einzelner Fleck auf eine Oberfläche des zu untersuchenden optischen Systems gerichtet wird, wobei ein Kegel des polarisierten Lichts von einem einzelnen Bündel abgeleitet wird.

5. Ellipsometrie-Verfahren nach Anspruch 1, dadurch gekennzeichnet, daß die Einfallswinkel über einen Winkelbereich von zumindest 1 bis 2 Grad variieren.

6. Ellipsometrie-Verfahren nach Anspruch 1, dadurch gekennzeichnet, daß der Einfallswinkelbereich sich von 2 Grad bis mehr als 30 Grad erstreckt.

7. Ellipsometrie-Verfahren nach Anspruch 1, dadurch gekennzeichnet, daß das Licht mit unterschiedlichen Einfallswinkeln ausgebildet wird, indem paralleles Licht durch die zumindest eine Linse gerichtet wird, um das Licht auf dem zu untersuchenden optischen System zu fokussieren, wobei die Linse ein Verhältnis der wirksamen Apertur zur Brennweite aufweist, um das Licht auf dem zu untersuchenden optischen System mit Einfallswinkeln zu fokussieren, die in einem Bereich von zumindest 1 bis 2 Grad variieren.

8. Ellipsometrie-Verfahren nach Anspruch 1, dadurch gekennzeichnet, daß das Licht, das mit dem zu untersuchenden optischen System unter unterschiedlichen Einfallswinkeln in Wechselwirkung tritt, im wesentlichen elliptisch polarisiertes Licht ist.

9. Ellipsometrie-Verfahren nach Anspruch 1, dadurch gekennzeichnet, daß das polarisierte Licht gleichzeitig unter unterschiedlichen Einfallswinkeln auf den gleichen Fleck auf der Oberfläche des zu untersuchenden optischen Systems gerichtet wird, um es an der Oberfläche zu reflektieren.

10. Ellipsometrie-Verfahren nach Anspruch 9, dadurch gekennzeichnet, daß der Fleck einen Durchmesser von weniger als oder gleich 10 µm besitzt.

11. Ellipsometrie-Verfahren nach Anspruch 1, dadurch gekennzeichnet, daß das polarisierte Licht monochromatisches Licht ist.

12. Ellipsometrie-Verfahren nach Anspruch 1, dadurch gekennzeichnet, daß das polarisierte Licht zwei oder mehr quasi-monochromatische Wellenlängenbereiche aufweist und daß alle Wellenlängenbereiche außer einem zu vorbestimmtem Zeitpunkt ausgeblendet werden.

13. Ellipsometrie-Verfahren nach Anspruch 1, dadurch gekennzeichnet, daß der Schritt des Messens das Detektieren des mit dem zu untersuchenden optischen System in Wechselwirkung tretenden Lichts für jeden der Vielzahl von unterschiedlichen Einfallswinkeln umfaßt.

14. Ellipsometrie-Verfahren nach Anspruch 13, dadurch gekennzeichnet, daß das in Wechselwirkung tretende Licht refokussiert wird, indem es durch zumindest eine Linse verläuft, bevor das Licht detektiert wird.

15. Ellipsometrie-Verfahren nach Anspruch 13, dadurch gekennzeichnet, daß das in Wechselwirkung tretende Licht für jeden der Vielzahl von unterschiedlichen Licht-Einfallswinkeln separat und gleichzeitig detektiert wird.

16. Ellipsometrie-Verfahren nach Anspruch 13, dadurch gekennzeichnet, daß eine Vielzahl von Licht-Detektorvorrichtungen derart in einem Feld angeordnet sind, daß jede Licht-Detektorvorrichtung in Wechselwirkung tretendes Licht aus unterschiedlichen Lichteinfallswinkeln empfängt und detektiert.

17. Ellipsometrie-Verfahren nach Anspruch 13, dadurch gekennzeichnet, daß es desweiteren die Begrenzung der Wellenlängenbereiche des detektierten Lichts auf einen quasi-monochromatischen Bereich umfaßt.

18. Ellipsometrie-Verfahren nach Anspruch 13, dadurch gekennzeichnet, daß es desweiteren die Schritte des Streuens des mit dem zu untersuchenden optischen System in Wechselwirkung tretenden Lichts sowie das Detektieren der Wellenlängenänderung und der Änderung des Einfallswinkels des gestreuten Lichts umfaßt.

19. Ellipsometrie-Verfahren nach Anspruch 18, dadurch gekennzeichnet, daß das polarisierte Licht polychromatisches Licht ist.

20. Ellipsometrie-Verfahren nach Anspruch 1, dadurch gekennzeichnet, daß es das Bestimmen einer Veränderung des Amplitudenverhältnisses tan ψ und eine Änderung der Phasendifferenz Δ des mit dem zu untersuchenden optischen Systems in Wechselwirkung tretenden Lichts für jeden der Vielzahl von unterschiedlichen Einfallswinkeln umfaßt.

21. Ellipsometrie-Verfahren nach Anspruch 1, dadurch gekennzeichnet, daß jeder der Vielzahl von unterschiedlichen Einfallswinkeln ein enger Bereich der Einfallswinkel des in Wechselwirkung tretenden Lichts ist.

22. Ellipsometrie-Verfahren nach Anspruch 1, dadurch gekennzeichnet, daß es desweiteren die Ausrichtung eines Musters auf dem zu untersuchenden optischen System für die Ellipsometrie umfaßt, wobei das Ausrichten das Richten von polarisiertem Licht von einem einzelnen Lichtbündel auf eine Oberfläche des Musters mit unterschiedlichen Einfallswinkeln umfaßt, so daß das Licht auf ein Detektorfeld reflektiert wird, um das von der Oberfläche reflektierte Licht für jeden einer Vielzahl von unterschiedlichen Einfallswinkeln zu erfassen, und die Schritte des Ausblendens von Lichtstrahlen innerhalb eines bestimmten Bereichs des auf die Musteroberfläche gerichteten Lichtbündels, das Bestimmen der Fläche des Detektorfeldes, die infolge des Ausblendens nicht von dem reflektierten Licht angestrahlt ist, und das Durchführen jeglicher notwendiger Einstellungen der Position des Musters umfaßt, so daß eine richtige Fläche des Detektors nicht von dem reflektierten Licht angestrahlt wird.

23. Ellipsometer mit einer Vorrichtung zum Richten eines Bündels polarisierten Lichts unter einem Winkel zu einer Normalen auf die Oberfläche eines zu untersuchenden optischen Systems, so daß das Bündel mit dem zu untersuchenden optischen System in Wechselwirkung tritt, und einer Vorrichtung zum Messen der Veränderung des Polarisationszustandes des mit dem optischen System in Wechselwirkung tretenden Lichts,
dadurch gekennzeichnet,
daß die Vorrichtung zum Richten des polarisierten Lichts eine Vorrichtung zum gleichzeitigen Richten des polarisierten Lichts des Lichtbündels über einen Einfallswinkelbereich auf das zu untersuchende optische System mit unterschiedlichen Einfallswinkeln zu einer Normalen zu der Oberfläche des zu untersuchenden Systems umfaßt, wobei die Vorrichtung zum gleichzeitigen Richten zumindest eine Linse umfaßt, die das einzelne Lichtbündel vollständig schräg auf dem zu untersuchenden optischen System fokussiert, während sie den Polarisationszustand des Lichts nur vernachlässigbar verändert, wobei ein Haupt-Einfallswinkel des fokussierten Bündels größer als der Einfallswinkelbereich ist, und
daß die Meßvorrichtung die Veränderung des Polarisationszustandes des mit dem zu untersuchenden optischen System in Wechselwirkung tretenden Lichts für jeden einer Vielzahl der unterschiedlichen Einfallswinkeln mißt.

24. Ellipsometer nach Anspruch 23, dadurch gekennzeichnet, daß die unterschiedlichen Einfallswinkel über einen Winkelbereich von zumindest 1 bis 2 Grad variieren.

25. Ellipsometer nach Anspruch 23, dadurch gekennzeichnet, daß der Einfallswinkelbereich sich von 2 Grad bis mehr als 30 Grad erstreckt.

26. Ellipsometer nach Anspruch 23, dadurch gekennzeichnet, daß die zumindest eine Linse zum Fokusieren des Lichts auf dem zu untersuchenden optischen System eine Verhältnis der wirksamen Apertur zur Brennweite aufweist, um das Licht auf dem zu untersuchenden optischen System mit Einfallswinkeln zu fokussieren, die über einen Bereich von 1 bis 2 Grad variieren.

27. Ellipsometer nach Anspruch 23, dadurch gekennzeichnet, daß die Vorrichtung zum Richten polarisierten Lichts elliptisch polarisiertes Licht auf das zu untersuchende optische System richtet.

28. Ellipsometer nach Anspruch 23, dadurch gekennzeichnet, daß die Vorrichtung zum gleichzeitigen Richten polarisierten Lichts auf das zu untersuchende optische System unter unterschiedlichen Einfallswinkeln das Licht unter unterschiedlichen Einfallswinkeln auf den gleichen Fleck auf des zu untersuchenden optischen System richtet.

29. Ellipsometer nach Anspruch 23, dadurch gekennzeichnet, daß das polarisierte Licht monochromatisches Licht ist.

30. Ellipsometer nach Anspruch 23, dadurch gekennzeichnet, daß die Richt-Vorrichtung polarisiertes Licht richtet, das zwei oder mehr quasi-monochromatisches Wellenlängenbereiche aufweist, und desweiteren eine Vorrichtung umfaßt, die selektiv alle Wellenlängenbereiche außer einem zu vorbestimmtem Zeitpunkt ausblendet.

31. Ellipsometer nach Anspruch 23, dadurch gekennzeichnet, daß die Vorrichtung zum Messen eine Vielzahl von Detektoren aufweist, um das mit dem zu untersuchenden optischen System in Wechselwirkung tretende Licht in jedem der Vielzahl von unterschiedlichen Einfallswinkeln zu detektieren.

32. Ellipsometer nach Anspruch 31, dadurch gekennzeichnet, daß die Vorrichtung zum Messen desweiteren eine Linse oder Linsen umfaßt, um das in Wechselwirkung tretende Licht zu refokussieren, bevor es durch die Vielzahl von Detektoren erfaßt wird.

33. Ellipsometer nach Anspruch 31, dadurch gekennzeichnet, daß die Vielzahl von Detektoren in Form eines Lichtdetektorfeldes so angeordnet sind, daß jeder Lichtdetektor in Wechselwirkung tretendes Licht aus unterschiedlichen Lichteinfallswinkeln empfängt und erfaßt.

34. Ellipsometer nach Anspruch 33, dadurch gekennzeichnet, daß das Feld ein lineares Feld von Lichtdetektoren ist.

35. Ellipsometer nach Anspruch 33, dadurch gekennzeichnet, daß die Detektoren fotosensitive Festkörper-Detektoren sind, die in einen Halbleiterchip integriert sind.

36. Ellipsometer nach Anspruch 23, dadurch gekennzeichnet, daß es desweiteren eine Vorrichtung zum Streuen des in Wechselwirkung tretenden Lichts und eine Vorrichtung zur Erfassung der Wellenlängenänderung zusammen mit einer Änderung des Einfallswinkels des gestreuten Lichts umfaßt.

37. Ellipsometer nach Anspruch 36, dadurch gekennzeichnet, daß das polarisierte Licht polychromatisches Licht ist.

38. Ellipsometer nach Anspruch 23, dadurch gekennzeichnet, daß die Vorrichtung zum Richten polarisierten Lichts eine Vielzahl von Lichtquellen umfaßt, die jeweils so angeordnet sind, daß sie Licht abgeben, das entlang einer gemeinsamen optischen Achse verläuft.

39. Ellipsometer nach Anspruch 38, dadurch gekennzeichnet, daß desweiteren eine Vorrichtung vorgesehen ist, die das polarisierte Licht einer oder mehrerer der Vielzahl von Quellen daran hindert, die Vorrichtung zum Messen zu erreichen.

40. Ellipsometer nach Anspruch 39, dadurch gekennzeichnet, daß die Vorrichtung zur Verhinderung eine Vorrichtung aus der eine Blende, eine Einrichtung zum Abschalten der einen oder mehrerer Lichtquellen und einen Sperrfilter umfassenden Gruppe ist.

41. Ellipsometer nach Anspruch 23, dadurch gekennzeichnet, daß die Vorrichtung zum Messen die Bestimmung einer Veränderung des Amplitudenverhältnisses tan ψ und einer Veränderung der Phasendifferenz Δ des mit dem zu untersuchenden optischen System in Wechselwirkung tretenden Lichts für jeden der Vielzahl von unterschiedlichen Einfallswinkeln umfaßt.

42. Ellipsometer nach Anspruch 23, dadurch gekennzeichnet, daß jeder der Vielzahl von unterschiedlichen Einfallswinkeln ein enger Bereich der Einfallswinkel des in Wechselwirkung tretenden Lichts ist.

## Revendications

1. Méthode d'ellipsomètrie consistant à guider un faisceau de lumière polarisée selon un angle normal à la surface d'un système optique étudié de façon que le faisceau interagisse avec le système optique étudié et à mesurer le changement d'état de polarisation de la lumière ayant interagi avec le système optique caractérisée en ce que la lumière polarisée dudit faisceau est simultanément dirigée selon différents angles d'incidence par rapport à la normale à la surface du système optique étudié en couvrant une gamme d'angles d'incidence grâce à la convergence du faisceau lumineux de manière entièrement oblique sur le système optique étudié à travers au moins une lentille qui ne modifie que de façon négligeable l'état de polarisation de la lumière et avec un angle médian d'incidence dudit faisceau convergent plus grand que ladite gamme d'angles d'incidence, et en ce que le changement d'état de polarisation de la lumière ayant interagi avec le système optique étudié est mesuré pour chacun des angles d'incidence de la pluralité desdits angles d'incidence.

2. Méthode d'ellipsomètrie selon la revendication 1, dans laquelle la lumière interagit avec le système optique étudié par transmission à travers un matériau du système optique.

3. Méthode d'ellipsomètrie selon la revendication 1, dans laquelle la lumière interagit avec le système optique étudié par réflexion sur la surface du système optique.

4. Méthode d'ellipsomètrie selon la revendication 1, dans laquelle la lumière est dirigée sur la surface du système optique étudié en un point unique avec un cône de lumière polarisée issue d'un faisceau unique.

5. Méthode d'ellipsomètrie selon la revendication 1, dans laquelle les angles d'incidence varient dans une gamme d'angles s'étendant sur au moins un ou deux degrés.

6. Méthode d'ellipsomètrie selon la revendication 1, dans laquelle la gamme d'angles d'incidence s'étend de deux degrés jusqu'à plus de trente degrés.

7. Méthode d'ellipsomètrie selon la revendication 1, dans laquelle la lumière incidente selon les différents angles est générée en envoyant une lumière parallèle à travers au moins ladite lentille pour focaliser la lumière sur le système optique étudié, la lentille ayant un rapport ouverture effective sur distance focale de manière à focaliser la lumière sur le système optique étudié selon des angles d'incidence variant dans une gamme s'étendant sur au moins un ou deux degrés.

8. Méthode d'ellipsomètrie selon la revendication 1, dans laquelle la lumière dirigée pour interagir avec le système optique étudié à différents angles d'incidence est, en général, une lumière polarisée elliptiquement.

9. Méthode d'ellipsomètrie selon la revendication 1, dans laquelle la lumière polarisée est simultanément dirigée selon différents angles d'incidence en un même point de la surface du système optique étudié pour être réfléchie sur la surface.

10. Méthode d'ellipsomètrie selon la revendication 9, dans laquelle ledit point a un diamètre inférieur ou égal à dix microns.

11. Méthode d'ellipsomètrie selon la revendication 1, dans laquelle la lumière polarisée est une lumière monochromatique.

12. Méthode d'ellipsomètrie selon la revendication 1, dans laquelle la lumière polarisée est composée d'au moins deux gammes de longueurs d'onde quasi-monochromatiques et où toutes sauf une de ces gammes de longueurs d'onde sont exclues à un moment donné.

13. Méthode d'ellipsomètrie selon la revendication 1, dans laquelle l'étape de mesure comprend la détection de la lumière ayant interagi avec le système optique étudié pour chaque angle de la pluralité des différents angles d'incidence.

14. Méthode d'ellipsomètrie selon la revendication 13, dans laquelle la lumière ayant interagi est refocalisée en traversant au moins une lentille avant d'être détectée.

15. Méthode d'ellipsomètrie selon la revendication 13, dans laquelle la lumière ayant interagi pour chacun des différents angles d'incidence de ladite pluralité des angles d'incidence est simultanément détectée.

16. Méthode d'ellipsomètrie selon la revendication 13, dans laquelle plusieurs détecteurs de lumière sont disposés de manière à intercepter et à détecter la lumière ayant interagi pour les différents angles de la lumière incidente.

17. Méthode d'ellipsomètrie selon la revendication 13, comprenant en plus une restriction des gammes de longueurs d'onde de la lumière détectée à des portions quasi-monochromatiques.

18. Méthode d'ellipsomètrie selon la revendication 13, comprenant en plus des étapes de dispersion de la lumière ayant interagi avec le système optique étudié et de détection des variations de longueurs d'onde et d'angles d'incidence de la lumière dispersée.

19. Méthode d'ellipsomètrie selon la revendication 18, dans laquelle la lumière polarisée est une lumière polychromatique.

20. Méthode d'ellipsomètrie selon la revendication 1, comprenant la détermination du changement d'amplitude du ratio tangente ψ et du changement de la différence de phase Δ de la lumière ayant interagi avec le système optique étudié pour chacun des différents angles d'incidence de ladite pluralité des angles d'incidence.

21. Méthode d'ellipsomètrie selon la revendication 1, dans laquelle ladite pluralité des différents angles d'incidence est une étroite gamme d'angles d'incidence de la lumière ayant interagi.

22. Méthode d'ellipsomètrie selon la revendication 1, comprenant en outre l'alignement d'un échantillon du système optique étudié par ellipsomètrie, ledit alignement consistant dans l'envoi de lumière polarisée sur la surface de l'échantillon selon différents angles d'incidence à partir d'un unique faisceau de lumière afin que ladite lumière soit réfléchie vers une barrette de détecteurs pour la détection de la lumière réfléchie sur la surface pour chacun des angles d'incidence d'une pluralité d'angles d'incidence, et comprenant les étapes d'élimination des rayons lumineux à l'intérieur d'une certaine zone du faisceau lumineux dirigé sur la surface de l'échantillon, de détermination de la zone de la barrette de détecteurs qui n'est pas illuminée par la lumière réfléchie à cause de ladite élimination, et de tout réglage nécessaire dans la position de l'échantillon de manière à ce qu'une zone adéquate du détecteur ne soit pas illuminée par la lumière réfléchie.

23. Ellipsomètre comprenant des moyens pour diriger un faisceau de lumière polarisée selon un angle normal à la surface d'un système optique étudié de manière à ce que ledit faisceau interagisse avec le système optique étudié, et des moyens de mesure du changement d'état de polarisation de ladite lumière ayant interagi avec le système optique étudié, caractérisé en ce que lesdits moyens pour diriger la lumière polarisée comprennent des moyens pour diriger simultanément la lumière polarisée dudit faisceau lumineux sur le système optique étudié selon différents angles d'incidence par rapport à la normale à la surface du système optique étudié en couvrant une gamme d'angles d'incidence, lesdits moyens de direction simultanée comprenant au moins une lentille focalisant l'unique faisceau de lumière entièrement de façon oblique sur le système optique étudié et ne modifiant que légèrement l'état de polarisation de la lumière, et avec un angle médian d'incidence dudit faisceau convergent plus grand que ladite gamme d'angles d'incidence, et en ce que lesdits moyens de mesure mesurent le changement d'état de polarisation de ladite lumière ayant interagi avec le système optique étudié pour chacun des angles d'incidence de la pluralité des angles d'incidence.

24. Ellipsomètre selon la revendication 23, dans lequel lesdits différents angles d'incidence varient dans une gamme d'au moins un ou deux degrés.

25. Ellipsomètre selon la revendication 23, dans lequel la gamme d'angle d'incidence s'étend de deux degrés jusqu'à plus de trente degrés.

26. Ellipsomètre selon la revendication 23, dans lequel ladite lentille focalisant la lumière sur le système optique étudié a un rapport ouverture effective sur distance focale de manière à focaliser la lumière sur le système optique étudié selon des angles d'incidence variant dans une gamme d'au moins un ou deux degrés.

27. Ellipsomètre selon la revendication 23, dans lequel lesdits moyens pour diriger la lumière polarisée dirigent elliptiquement la lumière polarisée sur le système optique étudié.

28. Ellipsomètre selon la revendication 23, dans lequel lesdits moyens pour diriger simultanément la lumière polarisée sur le système optique étudié à différents angles d'incidence dirigent la lumière à différents angles d'incidence sur un même point du système optique étudié.

29. Ellipsomètre selon la revendication 23, dans lequel ladite lumière polarisée est une lumière monochromatique.

30. Ellipsomètre selon la revendication 23, dans lequel lesdits moyens pour diriger la lumière dirigent une lumière polarisée composée d'au moins deux régions de longueurs d'onde quasi-monochromatiques, et comprennent également des moyens pour exclure sélectivement toutes sauf une des régions de longueurs d'onde à un moment donné.

31. Ellipsomètre selon la revendication 23, dans lequel lesdits moyens de mesure comprennent une pluralité de détecteurs pour détecter la lumière ayant interagi avec le système optique étudié pour chacun de ladite pluralité des différents angles d'incidence.

32. Ellipsomètre selon la revendication 31, dans lequel lesdits moyens de mesure comprennent également une ou des lentille(s) afin de refocaliser la lumière ayant interagi avant sa détection par ladite pluralité de détecteurs.

33. Ellipsomètre selon la revendication 31, dans lequel ladite pluralité de détecteurs est agencée sous forme d'une barrette de détecteurs situées de manière à intercepter et détecter respectivement la lumière ayant interagi selon lesdits différents angles de la lumière incidente.

34. Ellipsomètre selon la revendication 33, dans lequel ladite barrette est une barrette linéaire de détecteurs de lumière.

35. Ellipsomètre selon la revendication 33, dans lequel lesdits détecteurs sont des détecteurs solides photosensibles intégrés sur un circuit intégré semi-conducteur.

36. Ellipsomètre selon la revendication 23, comprenant également des moyens pour disperser la lumière ayant interagi et des moyens pour détecter la variation de longueur d'onde en fonction de la variation de l'angle d'incidence de la lumière dispersée.

37. Ellipsomètre selon la revendication 36, dans lequel la lumière polarisée est une lumière polychromatique.

38. Ellipsomètre selon la revendication 23, dans lequel les moyens pour diriger la lumière polarisée comprennent une pluralité de sources lumineuses chacune arrangée de manière à produire une lumière cheminant le long d'un même axe optique.

39. Ellipsomètre selon la revendication 38, comprenant également des moyens d'arrêt pour empêcher la lumière polarisée d'une des sources d'atteindre les moyens de mesure.

40. Ellipsomètre selon la revendication 39, dans lequel les moyens d'arrêt consistent en des obturateurs, des moyens pour déconnecter une ou plusieurs desdites sources ou des filtres bloquants.

41. Ellipsomètre selon la revendication 23, dans lequel lesdits moyens de mesure permettent la détermination d'un changement dans l'amplitude du ratio de tangente ψ et d'un changement dans la différence de phase Δ de la lumière ayant interagi avec le système optique étudié pour chacun des différents angles d'incidence de ladite pluralité des angles d'incidence.

42. Ellipsomètre selon la revendication 23, dans lequel chacun de ladite pluralité des différents angles d'incidence est une étroite gamme des angles d'incidence de la lumière ayant interagi.
